# EUROPÄISCHE PATENTSCHRIFT

(11) **EP 0 687 317 B1**
(45) Veröffentlichungstag und Bekanntmachung des Hinweises auf die Patenterteilung: **13.11.1996**
(21) Anmeldenummer: 94909916.2
(22) Anmeldetag: 03.03.1994
(51) Int. Cl.: D04H 1/64, D04H 1/58, D04H 1/60

(54) **VERNETZBARE DISPERSIONSPULVER ALS BINDEMITTEL FÜR FASERN**
CROSS-LINKABLE DISPERSION POWDER USEFUL AS BINDER FOR FIBERS
POUDRE RETICULABLE DE DISPERSION UTILE COMME LIANT DE FIBRES

(30) Priorität: 04.03.1993 DE 4306808
(43) Veröffentlichungstag der Anmeldung: 20.12.1995
(73) Patentinhaber: Wacker-Chemie GmbH, D-81737 München (DE)
(72) Erfinder: KINKEL, Johannes, D-84547 Emmerting (DE); BRINK, Gerhard, F-69006 Lyon (FR); ERNET, Walter, D-84489 Burghausen (DE); SCHULZE, Joachim, D-84489 Burghausen (DE); WIERER, Konrad Dr., D-84489 Burghausen (DE)
(74) Vertreter: Schuderer, Michael
(86) Internationale Anmeldenummer: EP9400625
(87) Internationale Veröffentlichungsnummer: WO9420661

(56) Entgegenhaltungen:
- EP-A- 0 099 463
- EP-A- 0 256 364
- EP-A- 0 545 209
- WO-A-92/22603
- FR-A- 2 304 626
- FR-A- 2 346 379
- GB-A- 842 496

## Beschreibung

Die Erfindung betrifft die Verwendung von vernetzbaren, redispergierbaren Dispersionspulvern auf der Basis von Vinylester-Copolymerisaten oder (Meth)acrylsäureester-Copolymerisaten als Bindemittel zur Trockenbindung von Fasermaterialien.

Zur Erhöhung der Widerstandsfähigkeit gegen mechanische Belastung werden Fasergebilde mit Bindemittel verfestigt. Diese Bindemittel können in Form von Feststoffen, wie Pulver, Granulat oder Fasern, oder als Flüssigkeiten, wie Lösungen oder Dispersionen, zur Anwendung kommen. Die erhöhte Festigkeit resultiert aus der Bindung der Fasern durch die Polymeren, die an der Faser haften und so die Fasergebilde verstärken.

Aus der WO-A 90/14457 ist eine Verfahrensweise bekannt, bei der Glasfasern nach einem Krempelschritt mit thermoplastischem Pulver, beispielsweise Polypropylen, Polyester oder Polyamid, vermischt werden und das Fasergebilde anschließend bei erhöhter Temperatur und unter Druck verfestigt wird. Die AU-B 36659/89 beschreibt ebenfalls die Verfestigung von Glasfasermaterialien mittels thermoplastischen Pulvern. Hier wird der Einsatz von Polyestern oder Polystyrol empfohlen. Nachteilig ist die geringe Festigkeit der so gebundenen Fasergebilde bei Kontakt mit Wasser oder Lösungsmitteln.

Sollen Faservliese mit erhöhter Festigkeit, vor allem im Kontakt mit Wasser, Lösungsmitteln oder bei erhöhter Temperatur, erhalten werden, setzt man Polymere ein, die in einem bestimmten Verarbeitungsschritt vernetzen oder auspolymerisieren können. Die EP-B 0080144 (US-A 4451315) beschreibt die Verfestigung von Faservliesen aus Polyester-, Polyamid- oder Baumwollfasern mit Emulsionen von selbstvernetzenden Acrylestercopolymeren, Ethylen-Vinylacetat-Copolymeren oder selbstvernetzenden synthetischen Kautschuken. Man erhält damit zwar Vliesstoffe mit hoher Festigkeit; nachteilig bei der Verwendung von wäßrigen Bindemitteln ist allerdings der hohe Trocknungsaufwand; außerdem ist die Verteilung des Bindemittels in der Fasermatrix problematisch.

Die Verfestigung von pulverförmigen, vernetzbaren Polymerisaten auf der Basis von Phenol-Formaldehyd-Harzen ist in der US-A 4612224 beschrieben. Nachteilig bei diesem Bindersystem ist die hohe Formaldehydemission bei der Herstellung und Verwendung der so verfestigten Fasermaterialien.

Der Erfindung lag die Aufgabe zugrunde, Bindemittel für die Verfestigung von Fasermaterialien zur Verfügung zu stellen, die als Pulver einsetzbar sind, hohe Naßfestigkeit und guten Wärmestand aufweisen, unter Vermeidung von Schadstoffemissionen bei der Verarbeitung.

Gelöst wurde die Aufgabe durch die Entwicklung eines Trockenbinders auf der Basis von thermoplastischen Copolymerisaten, welche nur geringe Anteile an vernetzend wirkenden Comonomeren aufweisen und trotzdem eine hohe Festigkeit bei vernachlässigbarer Formaldehyd-Emission bewirken.

Wärmehärtbare Copolymerisate auf der Basis von Acrylsäureestern und/oder Vinylestern, welche noch (Meth)acrylsäureester von mono- oder polyfunktionellen Hydroxycarbonsäuren und N-Alkoxyalkyl(meth)acrylamid als Vernetzerkomponenten enthalten, sind in der DE-A 2701490 (US-A 4129545) als pulverförmige Anstrichmittel beschrieben.

Gegenstand der Erfindung ist die Verwendung von vernetzbaren, redispergierbaren Dispersionspulvern auf der Basis von Vinylester-Copolymerisaten oder (Meth)acrylsäureester-Copolymerisaten als Bindemittel zur Trockenbindung von Fasermaterialien, wobei
die Vinylester-Copolymerisate eines oder mehrere Monomere aus der Gruppe der Vinylester von unverzweigten oder verzweigten Alkylcarbonsäuren mit 1 bis 15 C-Atomen,
die (Meth)acrylsäureester-Copolymerisate eines oder mehrere Monomere aus der Gruppe der Methacrylsäureester und Acrylsäureester von Alkoholen mit 1 bis 10 C-Atomen, und
die Vinylester- und (Meth)acrylsäureester-Copolymerisate jeweils 0.1 bis 10 Gew%, bezogen auf das Gesamtgewicht des Copolymerisats, von einem oder mehreren ethylenisch ungesättigten, vernetzend wirkenden Comonomeren, enthalten.

Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 10 C-Atomen, beispielsweise VeoVa9^{R} oder VeoVa10^{R}. Besonders bevorzugt ist Vinylacetat.

Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat. Besonders bevorzugt sind Methylacrylat, Methylmethacrylat, n-Butylacrylat und 2-Ethylhexylacrylat.

Bevorzugte ethylenisch ungesättigte, vernetzend wirkende Comonomere sind beispielsweise Acrylamidoglykolsäure (AGA), Methylacrylamidoglykolatmethylether (MAGME), N-Methylolacrylamid (NMAA), N-Methylolmethacrylamid, N-Methylolallylcarbamat, Alkylether, wie der Isobutylether, oder Ester des N-Methylolacrylamids, des N-Methylolmethacrylamids oder des N-Methylolallylcarbamats. Besonders bevorzugt wird N-Methylolacrylamid (NMAA) und N-Methylolmethacrylamid.

Die Vinylester-Copolymerisate können gegebenenfalls 1.0 bis 65 Gew%, bezogen auf das Gesamtgewicht der Comonomerphase, α-Olefine wie Ethylen oder Propylen und/oder Vinylaromaten wie Styrol und/oder Vinylhalogenide wie Vinylchlorid und/oder Acrylsäureester bzw. Methacrylsäureester von Alkoholen mit 1 bis 10 C-Atomen, wie Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat und/oder ethylenisch ungesättigte Dicarbonsäureester bzw. deren Derivate wie Diisopropylfumarat, die Dimethyl-, Dibutyl- und Diethylester der Maleinsäure bzw. Fumarsäure, oder Maleinsäureanhydrid enthalten. Die Auswahl aus den genannten Monomeren wird dabei so getroffen, daß Copolymerisate mit einer Glasübergangstemperatur T_{g} von -20°C bis +60°C erhalten werden.

Die (Meth)acrylsäureester-Copolymerisate können gegebenenfalls 1.0 bis 65 Gew%, bezogen auf das Gesamtgewicht der Comonomerphase, α-Olefine wie Ethylen oder Propylen und/oder Vinylaromaten wie Styrol und/oder Vinylhalogenide wie Vinylchlorid und/oder ethylenisch ungesättigte Dicarbonsäureester bzw. deren Derivate wie Diisopropylfumarat, die Dimethyl-, Dibutyl- und Diethylester der Maleinsäure bzw. Fumarsäure, oder Maleinsäureanhydrid enthalten. Die Auswahl aus den genannten Monomeren wird dabei so getroffen, daß Copolymerisate mit einer Glasübergangstemperatur Tg von -20°C bis +60°C erhalten werden.

In einer bevorzugten Ausführungsform enthalten die Vinylester-Copolymerisate und die (Meth)acrylsäureester-Copolymerisate noch 0.05 bis 3.0 Gew%, bezogen auf das Gesamtgewicht des Comonomergemisches, Hilfsmonomere aus der Gruppe der ethylenisch ungesättigten Carbonsäuren, vorzugsweise Acrylsäure oder Methacrylsäure, aus der Gruppe der ethylenisch ungesättigten Carbonsäureamide, vorzugsweise Acrylamid, aus der Gruppe der ethylenisch ungesättigten Sulfonsäuren bzw. deren Salze, vorzugsweise Vinylsulfonsäure, und/oder aus der Gruppe der mehrfach ethylenisch ungesättigten Comonomeren, beispielsweise Divinyladipat, Diallylmaleat, Allylmethacrylat oder Triallylcyanurat. Besonders bevorzugt werden Copolymere, welche Acrylamid in äquimolarer Menge zum jeweiligen Vernetzersystem enthalten.

Bevorzugte Vinylester-Copolymerisate enthalten:
70 bis 95 Gew% Vinylester, insbesonders Vinylacetat, sowie 5 bis 25 Gew% α-Olefin, insbesonders Ethylen, und/oder 5 bis 30 Gew% Diisopropylfumarat und 0.1 bis 10.0 Gew% N-Methylol(meth)acrylamid, oder
50 bis 70 Gew% Vinylester, insbesonders Vinylacetat, 10 bis 30 Gew% Vinylester einer α-verzweigten Carbonsäure, insbesonders VeoVa9^{R} und/oder VeoVa10^{R}, 5 bis 25 Gew% Ethylen und 0.1 bis 10.0 Gew% N-Methylol(meth)acrylamid oder
15 bis 50 Gew% Vinylester, insbesonders Vinylacetat, 30 bis 65 Gew% Vinylchlorid und/oder Diisopropylfumarat, 5 bis 25 Gew% Ethylen und 0.1 bis 10 Gew% N-Methylol(meth)acrylamid oder
50 bis 70 Gew% Vinylester, insbesonders Vinylacetat, 1 bis 30 Gew% Acrylsäureester, insbesonders n-Butylacrylat oder 2-Ethylhexylacrylat, 5 bis 25 Gew% Ethylen und 0.1 bis 10.0 Gew% N-Methylol(meth)acrylamid. Die Angaben in Gew% addieren sich jeweils auf 100 Gew%.

Bevorzugte (Meth)acrylsäureester-Copolymerisate enthalten: 30 bis 70 Gew% Methylmethacrylat, 70 bis 30 Gew% n-Butylacrylat und/oder 2-Ethylhexylacrylat und 0.1 bis 10 Gew% N-Methylol(meth)acrylamid, oder
30 bis 70 Gew% Styrol und 70 bis 30 Gew% n-Butylacrylat und/oder 2-Ethylhexylacrylat und 0.1 bis 10 Gew% N-Methylol-(meth)acrylamid. Die Angaben in Gew% addieren sich jeweils auf 100 Gew%.

Die Herstellung der Vinylester-Copolymerisate bzw. der (Meth)acrylsäureester-Copolymerisate erfolgt vorzugsweise nach dem Emulsionspolymerisationsverfahren. Die Polymerisation kann diskontinuierlich oder kontinuierlich, mit oder ohne Verwendung von Saatlatices, unter Vorlage aller oder einzelner Bestandteile des Reaktionsgemisches, oder unter teilweiser Vorlage und Nachdosierung der oder einzelner Bestandteile des Reaktionsgemisches, oder nach dem Dosierverfahren ohne Vorlage durchgeführt werden. Alle Dosierungen erfolgen vorzugsweise im Maße des Verbrauchs der jeweiligen Komponente.

Die Polymerisation wird in einem Temperaturbereich von 0 bis 100°C durchgeführt und mit den für die Emulsionspolymerisation üblicherweise eingesetzten Methoden eingeleitet. Die Initiierung erfolgt mittels der üblichen wasserlöslichen Radikalbildner, die vorzugsweise in Mengen von 0.01 bis 3.0 Gew%, bezogen auf das Gesamtgewicht der Monomeren, eingesetzt werden. Beispiele hierfür sind Ammonium- und Kaliumpersulfat, -peroxodisulfat; Wasserstoffperoxid; Alkylhydroperoxide, wie tert.-Butylhydroperoxid; Kalium-, Natrium- und Ammoniumperoxodiphosphat; Azoverbindungen, wie Azobisisobutyronitril oder Azobiscyanovaleriansäure. Gegebenenfalls können die genannten radikalischen Initiatoren auch in bekannter Weise mit 0.01 bis 0.5 Gew%, bezogen auf das Gesamtgewicht der Monomeren, Reduktionsmittel kombiniert werden. Geeignet sind zum Beispiel Formaldehydsulfoxylat-Salze oder Ascorbinsäure. Bei der Redoxinitiierung werden dabei vorzugsweise eine oder beide Redox-Katalysatorkomponenten während der Polymerisation dosiert.

Als Dispergiermittel können alle üblicherweise bei der Emulsionspolymerisation verwendeten Emulgatoren und Schutzkolloide eingesetzt werden. Vorzugsweise werden 1 bis 6 Gew%, bezogen auf das Gesamtgewicht der Monomeren, an Emulgator eingesetzt. Geeignet sind beispielsweise anionische Tenside, wie Alkylsulfate mit einer Kettenlänge von 8 bis 18 C-Atomen, Alkyl- und Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen. Geeignete nichtionische Tenside sind beispielsweise Alkylpolyglykolether oder Alkylarylpolyglykolether mit 8 bis 40 Ethylenoxideinheiten.

Gegebenenfalls können Schutzkolloide, vorzugsweise in Mengen von bis zu 15 Gew%, bezogen auf das Gesamtgewicht der Monomeren, eingesetzt werden. Beispiele hierfür sind Vinylalkohol/Vi-nylacetat-Copolymere mit einem Gehalt von 80 bis 100 Mol% Vinylalkoholeinheiten, Polyvinylpyrrolidone mit einem Molekulargewicht von 5000 bis 400000, Hydroxyethylcellulosen mit einem Substitutionsgradbereich von 1.5 bis 3.

Der für die Polymerisation gewünschte pH-Bereich, der im allgemeinen zwischen 2.5 und 10, vorzugsweise 3 und 8, liegt, kann in bekannter Weise durch Säuren, Basen oder übliche Puffersalze, wie Alkaliphosphate oder Alkalicarbonate, eingestellt werden. Zur Molekulargewichtseinstellung können bei der Polymerisation die üblicherweise verwendeten Regler, zum Beispiel Mercaptane, Aldehyde und Chlorkohlenwasserstoffe, zugesetzt werden.

Zur Herstellung der Dispersionspulver wird die Dispersion getrocknet, vorzugsweise sprühgetrocknet oder gefriergetrocknet, besonders bevorzugt sprühgetrocknet. Hierbei kann auf die bekannten Vorrichtungen, wie zum Beispiel Versprühen durch Mehrstoffdüsen oder mit der Scheibe, in einem gegebenenfalls erhitzten Trockengasstrom, zurückgegriffen werden. Im allgemeinen werden Temperaturen über 250°C nicht angewandt. Die optimale Temperatur des Trockengases kann in wenigen Versuchen ermittelt werden; oft haben sich Temperaturen über 60°C besonders bewährt.

Zur Erhöhung der Lagerfähigkeit und um zum Beispiel bei Pulvern mit niederer Glasübergangstemperatur Tg ein Verbacken und Verblocken zu verhindern, wird bei der Trocknung gegebenenfalls Antiblockmittel, beispielsweise Aluminiumsilikate, Kieselgur, Calciumcarbonat, zugegeben. Des weiteren können gegebenenfalls noch Entschäumer, beispielsweise auf Silikon- oder Kohlenwasserstoffbasis, oder Verdüsungshilfen, beispielsweise Polyvinylalkohole oder wasserlösliche Melamin-Formaldehyd-Kondensationsprodukte, der Dispersion zugegeben werden.

In einer bevorzugten Ausführungsform enthalten die Dispersionspulver noch 0 bis 30 Gew%, besonders bevorzugt 1 bis 15 Gew%, bezogen auf das Basispolymerisat, Polyvinylalkohol mit einem Hydrolysegrad von 85 bis 94 Mol%, und/oder 0 bis 10 Gew% Vinylalkoholcopolymerisate mit 5 bis 35 Gew% 1-Methylvinylalkoholeinheiten, und/oder 0 bis 30 Gew%, besonders bevorzugt 4 bis 20 Gew%, bezogen auf das Gesamtgewicht polymerer Bestandteile, Antiblockmittel und gegebenenfalls bis zu 2 Gew%, bezogen auf das Basispolymerisat, Entschäumer.

Das vernetzbare Dispersionspulver eignet sich zur Verfestigung von natürlichen oder synthetischen Fasermaterialien. Beispiele hierfür sind Holzfaser, Cellulosefaser, Wolle, Baumwolle, Mineralfasern, Keramikfasern, Kunstfasern auf der Basis von faserbildenden Polymeren wie Viskosefaser, Polyethylen-, Polypropylen-, Polyester-, Polyamid-, Polyacrylnitril- oder Carbonfaser, Fasern von Homo- oder Copolymerisaten des Vinylchlorids oder Fasern von Homo- oder Copolymerisaten des Tetrafluorethylens.

Vor der Verfestigung werden die Fasern flächenhaft ausgebreitet. Die Verfahren hierzu sind bekannt und primär von der Anwendung, in die das verfestigte Fasermaterial geht, abhängig. Die Fasern können mittels einer Luftlege-, Naßlege-, Direktspinn- oder Krempelvorrichtung ausgelegt werden. Gegebenenfalls können die Flächengebilde vor der Verfestigung mit Bindemittel noch mechanisch verfestigt werden, beispielsweise durch Kreuzlegen, Nadeln oder Wasserstrahlverfestigung.

Bei der erfindungsgemäßen Verwendung wird das pulverförmige Bindemittel in an sich bekannter Weise auf das, gegebenenfalls mechanisch vorverfestigte, Fasermaterial aufgestreut, eingestreut (beispielsweise bei Krempelwatten), eingerüttelt oder direkt mit der Faser vermischt. Je nach Anwendungsbereich liegt die für die Verfestigung des Fasermaterials notwendige Menge an Bindemittel zwischen 5 und 50 Gew% Bindemittel, bezogen auf das Fasergewicht.

In einer bevorzugten Ausführungsform werden die flächigen Fasergebilde vor dem Aufstreuen des Bindemittels mit Wasser angefeuchtet. Im allgemeinen beträgt die dafür notwendige Menge an Wasser von 5 bis 60 Gew%, vorzugsweise von 10 bis 35 Gew%, jeweils bezogen auf Gesamtgewicht der Trockenmischung aus Faser und Binder. Bei dieser Verfahrensweise kann nach dem Aufstreuen die Bindung des Fasermaterials durch Anwendung von Druck und Temperatur eingeleitet werden.

Es ist aber auch möglich, nach Aufstreuen des Binders auf die feuchte Faser, das Wasser, beispielsweise durch Erwärmen des Fasergebildes im Luftstrom, bei einer Temperatur von 80 bis 110°C zu entfernen. In diesem Fall muß vor der Vernetzung des Bindemittels erneut Wasser in der angegebenen Menge auf die Faser gesprüht werden. Mit dieser Verfahrensvariante wird eine Vorbindung des Fasermaterials erreicht, wodurch das Fasermaterial vorgebunden aber nicht vernetzt transportierbar wird. Dies ist ein wesentlicher Vorteil gegenüber der Bindung mit Dispersionen, bei der diese Vorbindung nicht möglich ist, da diese nicht mehr reaktivierbar sind.

Bei der Herstellung von Formkörpern aus einem Gemisch von Fasermaterial und Binderpulver in den angegebenen Mengen wird vorzugsweise so vorgegangen, daß Faser und Binder trocken gemischt werden und erst vor der Druck- und Temperaturbehandlung Wasser in der angegebenen Menge dem Gemisch zugegeben wird.

Die Verfestigung des Fasermaterials, sei es als Flächengebilde oder als Faser-Bindemittel-Gemisch zur Herstellung von Formkörpern, erfolgt durch Erwärmung auf eine Temperatur von vorzugsweise 100 bis 200°C unter einem Druck von bis zu 100 bar. Die anzuwendenden Druck- und Temperaturbereiche hängen primär von der Art des Fasermaterials ab.

Eine bevorzugte Verwendung ist die Herstellung von Formteilen aus Fasermaterialien, welche mit dem vernetzbaren Pulver verfestigt werden. Die Fasern werden dazu mit dem Bindemittel in den angegebenen Mengen vermischt und nach Zugabe von Wasser unter Druck- und Temperatureinwirkung in den angegebenen Bereichen verfestigt. Beispiele für diese Verwendung sind die Herstellung von Schallschutzmatten und Formteilen für die Automobilindustrie. Für Formteile werden bisher vor allem Phenolharze als Bindemittel eingesetzt. Die damit verbundenen Nachteile der Formaldehyd-und Phenolemission treten bei der erfindungsgemäßen Verwendung nicht auf.

Bevorzugt ist auch die Verwendung zur Bindung von Glasfasern.

Eine weitere bevorzugte Verwendung ist die zur Bindung von Watten, beispielsweise zur Herstellung von Polster-, Isolier- und Filterwatten. Bis dato werden hierzu primär Schmelzfasern, Schmelzpulver und Dispersionen von Vinylchlorid-Polymerisaten, zwecks Flammschutz, eingesetzt. Gegenüber der Verwendung von Schmelzfasern bzw. Schmelzpulver zeichnet sich die erfindungsgemäße Verwendung dadurch aus, daß bereits mit niedrigeren Auftragsmengen die gewünschten Festigkeiten erhalten werden. Ein weiterer Vorteil der erfindungsgemäßen Verwendung von vernetzbaren Dispersionspulvern liegt darin, daß die Zumischung von pulverförmigen Additiven, z.B. Flammschutzmittel, Pigmente, Salze, im Vergleich zu wäßrigen Dispersionen nicht so stark eingeschränkt ist, sowohl bezüglich der Art der Additive als auch bezüglich deren physikochemischen Eigenschaften. Mit pulverförmigen Additiven sind die Dispersionspulver in beliebiger Menge mischbar, ohne Zusatz von Tensiden und ohne Einschränkung der Topfzeiten.

Ähnliche Vorteile bietet die ebenfalls bevorzugte Verwendung der vernetzbaren Dispersionspulver zur Herstellung von Vliesstoffen aus Fasern, in der bis dato ebenfalls Polymerdispersionen, Schmelzpulver und Schmelzfasern eingesetzt werden.

Bevorzugt ist auch die Verwendung der vernetzbaren Pulver zur Herstellung von Nadelfilz. Im Stand der Technik werden hierzu vor allem wäßrige Dispersionen auf der Basis von Styrol/Butadien-Kautschuk, Ethylen/Vinylacetat- und Ethylen/Vinylacetat/Vinylchlorid-copolymeren eingesetzt. Die Dispersionen werden auf das durch Nadeln verfestigte Fasergewebe aufgetragen und im Heißkalander verfilmt. Bei der erfindungsgemäßen Verwendung der vernetzbaren Polymerpulver ist, auch unter Berücksichtigung der zur Vernetzung hinzugefügten Wassermenge, die aufzuwendende Trocknerleistung und damit der zur Herstellung notwendige Energiebedarf erheblich reduziert.

Zusammenfassend ausgedrückt, liegt der Vorteil der Verwendung der vernetzbaren Dispersionspulver bei Anwendungen, bei denen traditionell wäßrige Systeme eingesetzt werden, zum Beispiel Vliesstoffbindung, in einer deutlichen Verminderung des Trocknungsaufwands und der Abwassermengen. Bei Anwendungen, bei denen traditionell auspolymerisierbare Präpolymere oder Oligomere (z.B. Phenolharze) eingesetzt werden, dies sind beispielsweise die Glasfaserbindung und die Herstellung von Formteilen aus Fasermaterialien, liegt der Vorteil in einer deutlichen Verminderung der Reaktionstemperaturen und in einer Vereinfachung der Reaktionsgemischzusammensetzung.

Die nachfolgenden Beispiele dienen zur weiteren Erläuterung der Erfindung:

### Beispiel 1 (Vliesverfestigung):

Auf einem Laborkrempel wurden Vliese aus einer Polyester-Faser (6.7 dtex/60 mm) mit circa 50 g/m² Flächengewicht hergestellt. Unmittelbar am Krempelausgang wurden 20 Gew% Wasser, bezogen auf das Gesamtgewicht aus Faser und Binder, und anschließend ein Dispersionspulver auf der Basis eines Vinylacetat-Polymerisats mit 1 Gew% N-Methylolacrylamid in den unten angegebenen Mengen eingestreut. Die Vliese wurden bei den nachfolgend angegebenen Temperaturen verfestigt. Die mechanischen Eigenschaften (Höchstzugkraft und Dehnung) im trockenen und nassen (nach 1 Minute Lagerung in Wasser) Zustand wurden nach DIN 53857 bestimmt.
Vlies 1: Auftrag 26.2 Gew%, Trocknertemperatur 100°C
Vlies 2: Auftrag 28.4 Gew%, Trocknertemperatur 150°C
Vlies 3: Auftrag 27.6 Gew%, Trocknertemperatur 180°C

**Tabelle 1:**

| Vlies | Höchstzugkraft HZK [N] | Dehnung [%] | HZK relativ* [%] |
|---|---|---|---|
| 1 trocken | 4.8 | 46 | |
| naß | 0.4 | 37 | 8.3 |
| 2 trocken | 4.4 | 54 | |
| naß | 0.9 | 41 | 20.5 |
| 3 trocken | 5.8 | 42 | |
| naß | 2.2 | 33 | 37.9 |

| | | | |
|---|---|---|---|
| * HZK relativ = HZK_{naß} x 100 / HZK_{trocken} | | | |

### Beispiel 2 (Faserformkörper-Herstellung):

Zur Herstellung von Platten wurden 80 g Reißbaumwolle mit 20 g Dispersionspulver der nachfolgend angegebenen Zusammensetzung vermischt und auf einer Fläche von 20 x 20 cm² ausgelegt. Die Mischungen wurden teilweise noch mit Wasser per Sprühauftrag angefeuchtet. Anschließend wurden die Mischungen 5 Minuten lang bei Temperaturen zwischen 180 und 200°C bei 50 bar verpreßt, so daß 2 mm starke, 200 g/m² schwere Platten entstanden. Die Höchstzugkraft im trockenen und nassen (nach 10 Minuten Lagerung in Wasser) Zustand wurde nach DIN 53857 bestimmt. Zur Beurteilung der Quellung wurden die Platten bei Raumtemperatur 24 Stunden in Wasser gelagert.
Platte 1: ohne Feuchtigkeit verpreßt,
Dispersionspulver auf der Basis eines Vinylacetat-Homopolymerisats
Platte 2: mit 20 g Wasser verpreßt,
Dispersionspulver auf der Basis eines Vinylacetat-Homopolymerisats
Platte 3: ohne Feuchtigkeit verpreßt,
Dispersionspulver auf der Basis eines Vinylacetat-Polymerisats mit 1 Gew% N-Methylolacrylamid
Platte 4: mit 20 g Wasser verpreßt,
Dispersionspulver auf der Basis eines Vinylacetat-Polymerisats mit 1 Gew% N-Methylolacrylamid

**Tabelle 2:**

| Platte | Höchstzugkraft HZK [N] | HZK relativ [%] | Quellung |
|---|---|---|---|
| 1 trocken | 297 | | |
| naß | 16 | 5.4 | stark |
| 2 trocken | 570 | | |
| naß | 163 | 28.6 | leicht |
| 3 trocken | 822 | | |
| naß | 394 | 47.9 | stark |
| 4 trocken | 2251 | | |
| naß | 1279 | 56.8 | keine |

## Patentansprüche

1. Faserbindemittel zur Trockenbindung von Fasermaterialien, enthaltend vernetzbare, redispergierbare Dispersionspulver auf der Basis von Vinylester-Copolymerisaten eines oder mehrerer Monomere aus der Gruppe der Vinylester von unverzweigten oder verzweigten Alkylcarbonsäuren mit 1 bis 15 C-Atomen, oder von (Meth)acrylsäureester-copolymerisaten eines oder mehrerer Monomere aus der Gruppe der Methacrylsäureester und Acrylsäureester von Alkoholen mit 1 bis 10 C-Atomen, wobei
die Vinylester- und (Meth)acrylsäureester-Copolymerisate jeweils 0.1 bis 10 Gew%, bezogen auf das Gesamtgewicht des copolymerisats, von einem oder mehreren ethylenisch ungesättigten, vernetzend wirkenden Comonomeren, enthalten.

2. Faserbindemittel nach Anspruch 1, dadurch gekennzeichnet, daß ein oder mehrere vernetzend wirkende Comonomere aus der Gruppe Acrylamidoglykolsäure (AGA), Methylacrylamidoglykolatmethylether (MAGME), N- Methylolacrylamid (NMAA), N-Methylolmethacrylamid, N-Methylolallylcarbamat, Alkylether, wie der Isobutylether, oder Ester des N-Methylolacrylamids, des N-Methylolmethacrylamids oder des N-Methylolallylcarbamats enthalten sind.

3. Faserbindemittel nach Anspruch 1, dadurch gekennzeichnet, daß die Vinylester-Copolymerisate
70 bis 95 Gew% Vinylacetat, 5 bis 25 Gew% Ethylen und/oder 5 bis 30 Gew% Diisopropylfumarat und 0.1 bis 10.0 Gew% N-Methylol(meth)acrylamid oder
50 bis 70 Gew% Vinylacetat, 10 bis 30 Gew% VeoVa9^{R} und/oder VeoVa10^{R}, 5 bis 25 Gew% Ethylen und 0.1 bis 10.0 Gew% N-Methylol(meth)acrylamid oder
15 bis 50 Gew% Vinylacetat, 30 bis 65 Gew% Vinylchlorid und/oder Diisopropylfumarat, 5 bis 25 Gew% Ethylen und 0.1 bis 10 Gew% N-Methylol(meth)acrylamid oder
50 bis 70 Gew% Vinylacetat, 1 bis 30 Gew% n-Butylacrylat oder 2-Ethylhexylacrylat, 5 bis 25 Gew% Ethylen und 0.1 bis 10.0 Gew% N-Methylol(meth)acrylamid enthalten.

4. Faserbindemittel nach Anspruch 1, dadurch gekennzeichnet, daß die (Meth)acrylsäureester-Copolymerisate
30 bis 70 Gew% Methylmethacrylat, 70 bis 30 Gew% n-Butylacrylat und/oder 2-Ethylhexylacrylat und 0.1 bis 10 Gew% N-Methylol(meth)acrylamid oder
30 bis 70 Gew% Styrol und 70 bis 30 Gew% n-Butylacrylat und/oder 2-Ethylhexylacrylat und 0.1 bis 10 Gew% N-Methylol(meth)acrylamid enthalten.

5. Verfahren zur Trockenbindung von Fasermaterialien, dadurch gekennzeichnet, daß 5 bis 50 Gew%, bezogen auf das Fasergewicht, des Faserbindemittels aus Anspruch 1 bis 4 auf das, gegebenenfalls mechanisch vorverfestigte, Fasermaterial aufgestreut, eingestreut, eingerüttelt oder direkt mit der Faser vermischt werden, vor oder nach dem Aufstreuen mit 5 bis 60 Gew% Wasser, bezogen auf Gesamtgewicht der Trockenmischung aus Faser und Binder, angefeuchtet wird und zur Bindung der Fasern das Flächengebilde oder der Formkörper unter einem Druck von bis zu 100 bar auf 100 bis 200°C erwärmt wird.

6. Verfahren nach Anspruch 5, dadurch gekennzeichnet, daß nach dem Aufstreuen des Faserbindemittels auf die feuchte Faser das Wasser durch Erwärmen des Fasergebildes im Luftstrom bei einer Temperatur von 80 bis 110°C entfernt wird und vor der thermischen Vernetzung erneut Wasser in der angegebenen Menge auf die Faser gesprüht wird.

7. Verfahren nach Anspruch 5 und 6, dadurch gekennzeichnet, daß als Fasermaterialien Holzfaser, Cellulosefaser, Wolle, Baumwolle, Mineralfasern, Keramikfasern, Kunstfasern auf der Basis von faserbildenden Polymeren wie Viskosefaser, Polyethylen-, Polypropylen-, Polyester-, Polyamid-, Polyacrylnitril- oder Carbonfaser, Fasern von Homo- und copolymerisaten des Vinylchlorids oder Fasern von Homo- oder Copolymerisaten des Tetrafluorethylens eingesetzt werden.

8. Verwendung der Faserbindemittel nach Anspruch 1 bis 4 zur Herstellung von Formteilen aus Fasermaterialien, zur Bindung von Glasfasern, zur Bindung von Watten, zur Herstellung von Vliesstoffen und zur Herstellung von Nadelfilz.

## Claims

1. Fibre binders for dry binding of fibre materials, comprising crosslinkable, redispersible dispersion powders based on vinyl ester copolymers of one or more monomers from the group comprising vinyl esters of unbranched or branched alkylcarboxylic acids having 1 to 15 C atoms, or on (meth)acrylic acid ester copolymers of one or more monomers from the group comprising methacrylic acid esters and acrylic acid esters of alcohols having 1 to 10 C atoms, wherein
the vinyl ester and (meth)acrylic acid ester copolymers in each case comprise 0.1 to 10% by weight, based on the total weight of the copolymer, of one or more ethylenically unsaturated comonomers having a crosslinking action.

2. Fibre binder according to claim 1, characterized in that it comprises one or more comonomers having a crosslinking action from the group comprising acrylamidoglycolic acid (AGA), methylacrylamidoglycolate methyl ether (MAGME), N-methylolacrylamide (NMAA), N-methylolmethacrylamide, ally [sic] N-methylolcarbamate, alkyl ethers, such as isobutyl ether, or esters of N-methylolacrylamide, of N-methylolmethacrylamide or of allyl N-methylolcarbamate.

3. Fibre binder according to claim 1, characterized in that the vinyl ester copolymers comprise
70 to 95% by weight of vinyl acetate, 5 to 25% by weight of ethylene and/or 5 to 30% by weight of diisopropyl fumarate and 0.1 to 10.0% by weight of N-methylol(meth)acrylamide, or
50 to 70% by weight of vinyl acetate, 10 to 30% by weight of VeoVa9® and/or VeoVa10®, 5 to 25% by weight of ethylene and 0.1 to 10.0% by weight of N-methylol(meth)acrylamide, or
15 to 50% by weight of vinyl acetate, 30 to 65% by weight of vinyl chloride and/or diisopropyl fumarate, 5 to 25% by weight of ethylene and 0.1 to 10% by weight of N-methylol(meth)acrylamide, or
50 to 70% by weight of vinyl acetate, 1 to 30% by weight of n-butyl acrylate or 2-ethylhexyl acrylate, 5 to 25% by weight of ethylene and 0.1 to 10.0% by weight of N-methylol(meth)acrylamide.

4. Fibre binder according to claim 1, characterized in that the (meth)acrylic acid ester copolymers comprise 30 to 70% by weight of methyl methacrylate, 70 to 30% by weight of n-butyl acrylate and/or 2-ethylhexyl acrylate and 0.1 to 10% by weight of N-methylol(meth)acrylamide, or
30 to 70% by weight of styrene and 70 to 30% by weight of n-butyl acrylate and/or 2-ethylhexyl acrylate and 0.1 to 10% by weight of N-methylol(meth)acrylamide.

5. Process for dry binding of fibre materials, characterized in that 5 to 50% by weight, based on the fibre weight, of the fibre binder of claim 1 to 4 are sprinkled onto, sprinkled into or shaken into the optionally mechanically precompacted fibre material or mixed directly with the fibre, the mixture is moistened with 5 to 60% by weight of water, based on the total weight of dry mixture of fibre and binder, before or after the powder has been sprinkled on, and the sheet-like structure or the shaped article is heated at 100 to 200°C under a pressure of up to 100 bar to bind the fibres.

6. Process according to claim 5, characterized in that after the fibre binder has been sprinkled onto the moist fibre, the water is removed by heating the fibre structure in a stream of air at a temperature of 80 to 110°C and, before the thermal crosslinking, water is sprayed onto the fibre again in the stated amount.

7. Process according to claims 5 and 6, characterized in that the fibre materials used are wood fibres, cellulose fibres, wool, cotton, mineral fibres, ceramic fibres, synthetic fibres based on fibre-forming polymers, such as viscose fibres, fibres of polyethylene, polypropylene, polyester, polyamide, polyacrylonitrile or carbon, fibres of homo- and copolymers of vinyl chloride or fibres of homo- or copolymers of tetrafluoroethylene.

8. Use of the fibre binders according to claims 1 to 4 for the production of mouldings of fibre materials, for binding of glass fibres, for binding of wadding, for production of non-woven materials and for production of needle felt.

## Revendications

1. Liant de fibres pour la fixation à sec de matières fibreuses, contenant une poudre réticulable redispersible de dispersion à base de copolymères d'ester vinylique d'un ou de plusieurs monomères du groupe des esters vinyliques d'acides alcoylcarboxyliques non ramifiés ou ramifiés avec 1 à 15 atomes de C, ou de copolymères d'ester d'acide (méth)acrylique d'un ou de plusieurs monomères du groupe des esters d'acide méthacrylique et des esters d'acide acrylique d'alcools avec 1 à 10 atomes de C, où les copolymères d'ester vinylique et d'ester d'acide (méth)acrylique contiennent chaque fois 0,1 à 10% en poids, sur base du poids total du copolymère, d'un ou de plusieurs comonomères éthyléniquement insaturés, agissant comme réticulant.

2. Liant de fibres suivant la revendication 1, caractérisé en ce qu'il contient un ou plusieurs comonomères agissant comme réticulant, choisis dans le groupe du l'acide acrylamidoglycolique (AGA), du méthyléther d'acrylamidoglycolate de méthyle (MAGME), du N-méthylolacrylamide (NMAA), du N-méthylolméthacrylamide, du N-méthylolallylcarbamate, d'un alcoyléther comme l'isobutyléther ou d'un ester du N-méthylolacrylamide, du N-méthylolméthacrylamide ou du N-méthylolallylcarbamate.

3. Liant de fibres suivant la revendication 1, caractérisé en ce que les copolymères d'ester vinylique contiennent 70 à 95% en poids d'acétate de vinyle, 5 à 25% en poids d'éthylène et/ou 5 à 30% en poids de fumarate de diisopropyle et 0,1 à 10,0% en poids de N-méthylol(méth)acrylamide ou 50 à 70% en poids d'acétate de vinyle, 10 à 30% en poids de VeoVa9® et/ou de VeoVa10®, 5 à 25% en poids d'éthylène et 0,1 à 10,0% en poids de N-méthylol(méth)acrylamide ou 15 à 50% en poids d'acétate de vinyle, 30 à 65% en poids de chlorure de vinyle et/ou de fumarate de diisopropyle, 5 à 25% en poids d'éthylène et 0,1 à 10% en poids de N-méthylol(méth)acrylamide ou 50 à 70% en poids d'acétate de vinyle, 1 à 30% en poids d'acrylate de n-butyle et/ou d'acrylate de 2-éthylhexyle, 5 à 25% en poids d'éthylène et 0,1 à 10,0% en poids de N-méthylol(méth)acrylamide.

4. Liant de fibres suivant la revendication 1, caractérisé en ce que les copolymères d'ester d'acide (méth)acrylique contiennent 30 à 70% en poids de méthacrylate de méthyle, 70 à 30% en poids d'acrylate de n-butyle et/ou d'acrylate de 2-éthylhexyle et 0,1 à 10% en poids de N-méthylol(méth)acrylamide ou 30 à 70% en poids de styrène et 70 à 30% en poids d'acrylate de n-butyle et/ou d'acrylate de 2-éthylhexyle et 0,1 à 10% en poids de N-méthylol(méth)acrylamide.

5. Procédé de fixation à sec de matières fibreuses, caractérisé en ce que l'on répartit sur, répand sur, introduit par secousses dans, ou mélange directement avec les fibres, 5 à 50% en poids, sur base du poids de fibres, de liant de fibres suivant les revendications 1 à 4, sur la matière fibreuse facultativement mécaniquement préalablement renforcée, on humidifie, avant ou après l'application, avec 5 à 60% en poids d'eau, sur base du poids total du mélange de séchage de fibres et de liant, et on chauffe pour la fixation des fibres, l'édifice plan ou la pièce moulée à une pression de jusqu'à 100 bars et à 100 à 200°C.

6. Procédé suivant la revendication 5, caractérisé en ce que, après l'application du liant de fibres sur les fibres humides, on élimine l'eau par chauffage de l'édifice de fibres dans un courant d'air à une température de 80 à 110°C et avant la réticulation thermique, on pulvérise à nouveau de l'eau en les quantités données, sur les fibres.

7. Procédé suivant les revendications 5 et 6, caractérisé en ce que l'on utilise comme matières fibreuses, des fibres de bois, des fibres de cellulose, de la laine, du coton, des fibres minérales, des fibres céramiques, des fibres plastiques à base de polymères formant fibres comme des fibres en viscose, des fibres en polyéthylène, polypropylène, polyester, polyamide, polyacrylonitrile ou de carbone, des fibres d'homo- et de copolymères de chlorure de vinyle ou des fibres d'homo- ou de copolymères de tétrafluoroéthylène.

8. Utilisation du liant de fibres suivant les revendications 1 à 4, dans la préparation d'articles façonnés constitués de matières fibreuses, dans la fixation de fibres de verre, dans la fixation d'ouate, dans la préparation de toiles et dans la préparation de feutres.
